# FASCICULE DE BREVET EUROPEEN

(11) **EP 2 237 387 B1**
(45) Date de publication et mention de la délivrance du brevet: **17.10.2018**
(21) Numéro de dépôt: 10157437.4
(22) Date de dépôt: 23.03.2010
(51) Int. Cl.: H02J 7/35

(54) **Système d'alimentation électrique et procédé de contrôle de charge de générateurs électrochimiques**
Power supply system and charging control method for electrochemical generators
Stromversorgungssystem und Ladungssteuerungsverfahren für elektrochemische Generatoren

(30) Priorité: 03.04.2009 FR 0901634
(43) Date de publication de la demande: 06.10.2010
(73) Titulaire: Saft Groupe S.A., 93170 Bagnolet (FR)
(72) Inventeur: Chanson, Claude, 16200, Jarnac (FR); Juan, Antoine, 16430, Champniers (FR)
(74) Mandataire: Hirsch & Associés

(56) Documents cités:
- EP-A- 1 848 087
- DE-A1-102005 036 157
- US-A- 5 869 949

## Description

L'invention concerne le domaine des systèmes d'alimentation électrique comprenant des générateurs électrochimiques et un chargeur composé d'un dispositif de production d'électricité à partir d'une source d'énergie renouvelable, tel que des panneaux de cellules photovoltaïques, des éoliennes ou un dispositif hybride associant ces deux sources. L'invention concerne plus particulièrement le contrôle de la charge de générateurs électrochimiques alimentés par un dispositif de production d'électricité à partir d'une source d'énergie renouvelable.

Typiquement une batterie comporte une pluralité de générateurs électrochimiques appelés aussi accumulateurs ou éléments, reliés entre eux en série et/ou en parallèle. Chaque générateur électrochimique se décharge en fournissant de l'énergie électrique à une application donnée. Chaque générateur électrochimique peut être chargé par un chargeur qui fournit de l'énergie électrique à ses bornes pour augmenter la quantité d'énergie électrique stockée. Pour certaines applications, notamment extérieures et non reliées à un réseau électrique, le chargeur peut-être un panneau de cellules photovoltaïques, une ou plusieurs éoliennes, ou un dispositif hybride.

Dans une batterie, la résistance interne d'un générateur électrochimique peut varier d'un générateur à l'autre. Par conséquent le courant de charge peut varier d'une branche à l'autre de générateurs reliés en parallèle. La charge n'est donc pas uniforme pour tous les générateurs de la batterie. Ce problème d'équilibrage de la charge entre générateurs parallèles d'une batterie est bien connu.

Le document EP-A-1 848 087 décrit un dispositif et un procédé d'équilibrage du courant de charge entre plusieurs générateurs électrochimiques reliés en parallèle. Ce document propose de prévoir une unité de contrôle de charge sur chaque branche parallèle de générateurs électrochimiques. Chaque unité de contrôle est adaptée à mesurer le courant entrant dans la branche et à intégrer ce courant sur une période de temps. Lorsque le courant intégré dépasse une valeur de consigne, le courant de charge pour cette branche est interrompu.

Le dispositif décrit dans le document EP-A-1 848 087 n'est pas directement applicable au cas où le chargeur est constitué d'un dispositif de production d'électricité à partir d'une source d'énergie renouvelable. Par exemple, dans le cas d'un chargeur constitué d'un panneau de cellules photovoltaïques, le courant délivré varie fortement en fonction de l'ensoleillement du panneau et la source peut être limitée en énergie. Il est donc nécessaire de bien optimiser la répartition du courant de charge. C'est également le cas pour un chargeur constitué d'une éolienne ou d'un dispositif hybride.

Le dispositif décrit dans le document EP-A-1 848 087 vise uniquement à équilibrer la charge entre les différentes branches parallèles de la batterie pour éviter toute surcharge de certains générateurs. Mais ce document ne cherche pas à optimiser l'énergie fournie par le chargeur pour la répartir au mieux entre les différentes branches. Le dispositif décrit dans ce document ne prend pas en considération l'état de charge de chaque générateur (désigné SOC pour « State Of Charge » en anglais).

Or, le problème de l'optimisation de la répartition de l'énergie fournie par un chargeur est réel lorsque le chargeur n'est pas relié à un réseau électrique mais à une source d'énergie limitée, comme cela peut être le cas d'un chargeur constitué de panneaux de cellules photovoltaïques et/ou d'éoliennes. L'énergie disponible dans un tel chargeur est limitée, en quantité et dans le temps.

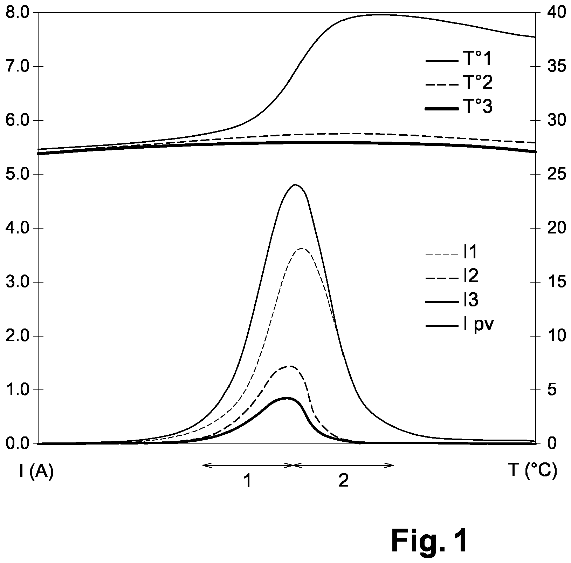

Le graphe de la figure 1 illustre ce problème de la répartition du courant de charge entre générateurs reliés en parallèle. Pour faciliter la compréhension, le chargeur considéré est un panneau de cellules photovoltaïques. Cependant la présentation qui suit s'applique également dans le cas où le chargeur est une éolienne ou un dispositif hybride. Le graphe de la figure 1 représente l'évolution dans le temps de la température et du courant dans trois branches de générateurs reliées en parallèle, mais il est entendu que le problème de répartition du courant de charge apparaît dès que deux générateurs sont reliés en parallèle, le problème étant accentué par le nombre de branches en parallèle.

Les courbes situées dans la partie inférieure du graphe représentent l'évolution des courants au cours d'une période donnée (par exemple une journée) et les courbes situées dans la partie supérieure du graphe représentent l'évolution des températures dans les générateurs sur cette même période de temps. La courbe Ipv représente le courant délivré par le panneau de cellules photovoltaïques (le chargeur) et les courbes I1, I2, et I3 représentent respectivement les courants traversant chacune des trois branches de générateurs électrochimiques reliés en parallèle. Les courbes T°1, T°2 et T°3 représentent respectivement les températures dans les générateurs électrochimiques des trois branches.

Le graphe de la figure 1 montre bien que le courant de charge Ipv varie fortement en fonction de l'ensoleillement. Le graphe de la figure 1 montre aussi deux phases durant la charge :
- Phase 1 : le courant Ipv fourni par le panneau de cellules photovoltaïques est réparti entre les trois branches de générateurs électrochimiques. La différence entre les courants traversant chaque branche est fonction de la résistance interne des générateurs de chaque branche. Sur la figure 1, la première branche prend plus de courant que les autres branches (I1>I2 et I1>I2) ; les générateurs de la première branche se chargent donc plus rapidement et la courbe de température T°1 indique que cette première branche de générateurs électrochimiques s'échauffe lorsque l'on s'approche de la fin de charge. Les générateurs des deux autres branches restent à température ambiante et ont été beaucoup moins chargés que les générateurs de la première branche.
- Phase 2 : le courant Ipv fourni par le panneau photovoltaïque diminue (fin de journée ou ombrage). La courbe du courant I1 indique que la première branche accapare tout le courant alors même que les générateurs de cette branche sont suffisamment chargés. La courbe de température T°1 indique que ce courant I1 de surcharge est perdu par échauffement.

Lorsque le chargeur est relié à un réseau électrique - sans limitation de l'énergie disponible - le courant de charge ne diminue pas comme sur le graphe de la figure 1. Les générateurs déjà chargés peuvent évacuer le courant de surcharge par échauffement thermique pendant que les générateurs des autres branches finissent de se charger.

La figure 1 montre bien la difficulté, d'une part de répartir la charge entre plusieurs branches parallèles de générateurs électrochimiques, et d'autre part d'utiliser au mieux le courant fourni par un panneau de cellules photovoltaïques. Cette analyse est aussi vraie dans le cas où le chargeur est une éolienne, ou un dispositif hybride.

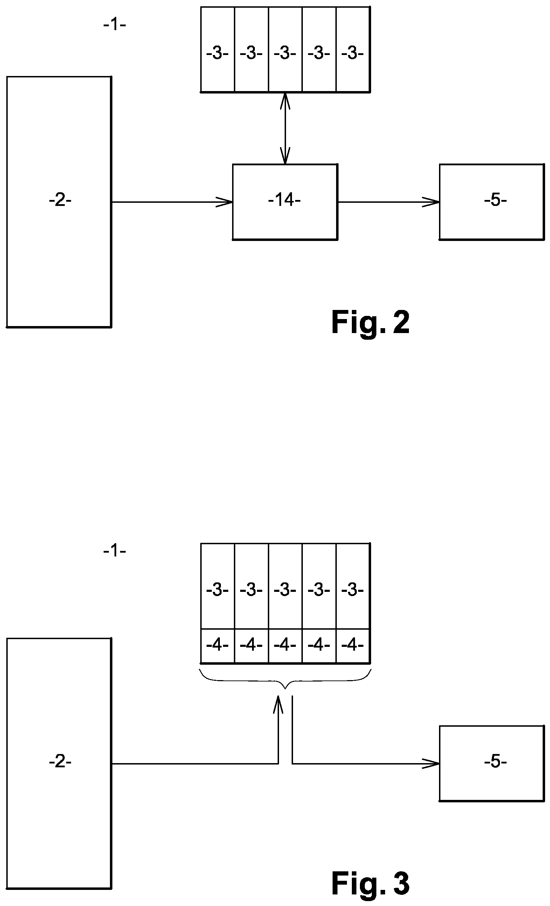

Typiquement, pour les systèmes d'alimentation électrique utilisant un chargeur constitué d'un dispositif de production d'électricité à partir d'une source d'énergie renouvelable, un dispositif électronique de contrôle de la charge est utilisé. La figure 2 illustre schématiquement un tel système d'alimentation électrique avec un dispositif de contrôle électronique centralisé. Un tel système est connu, notamment commercialisé par les sociétés Helios Technology® ou Phocos®.

La figure 2 montre un chargeur 2 qui est un dispositif de production d'électricité à partir d'une source d'énergie renouvelable, des générateurs électrochimiques 3 et un contrôleur central 14. Le contrôleur central 14 gère la charge de générateurs électrochimiques 3 et également leur décharge dans une application extérieure 5. Dans un tel système d'alimentation électrique 1, le contrôle des générateurs électrochimiques 3 est géré par un unique contrôleur central 14 qui répartit le courant de charge entre les différentes branches, au moyen d'interrupteurs par exemple, en fonction de mesures effectuées sur les générateurs. Le contrôleur central 14 doit donc être dimensionné en fonction du nombre de générateurs électrochimiques 3 dans le système 1. Si l'on souhaite ajouter ou enlever un générateur en parallèle, il est alors nécessaire de reconfigurer le contrôleur central 14. Cette obligation de reconfigurer le système lorsque le nombre de générateurs électrochimiques varie constitue un frein commercial pour les systèmes d'alimentation électrique utilisant un chargeur constitué d'un dispositif de production d'électricité à partir d'une source d'énergie renouvelable.

Le document US-A-5 635 816 décrit un dispositif et un procédé de régulation du courant de charge d'une batterie en fonction de son SOC. Le chargeur est un panneau de cellules photovoltaïques. Le courant de charge est un signal à modulation de largeur d'impulsion. La largeur des impulsions est fonction du SOC de la batterie déterminé à partir de la tension à ses bornes. Ce document ne décrit pas d'équilibrage du courant de charge entre différentes branches parallèles de générateurs électrochimiques. De plus, le dispositif décrit dans ce document est un dispositif centralisé qui ne peut être modulé en fonction du nombre de générateurs branchés en parallèle dans la batterie.

Le document US-A-6 081 104 décrit un dispositif et un procédé de régulation du courant de charge d'une batterie en fonction de son SOC. Le chargeur peut être un panneau de cellules photovoltaïques ou une éolienne. Le courant de charge est un signal à modulation de largeur d'impulsion. La largeur des impulsions est fonction de la tension aux bornes de la batterie. Ce document ne décrit pas d'équilibrage du courant de charge entre différentes branches parallèles de générateurs électrochimiques. De plus, le dispositif décrit dans ce document est un dispositif centralisé qui ne peut être modulé en fonction du nombre de générateurs branchés en parallèle dans la batterie.

Le document US-A-2007/0246943 décrit également un dispositif et un procédé de régulation du courant de charge d'une batterie en fonction de son SOC. Le chargeur est une éolienne. Le courant de charge est un signal à modulation de largeur d'impulsion. La largeur des impulsions est fonction du SOC déterminé à partir du courant entrant et sortant de la batterie. Ce document ne décrit pas d'équilibrage du courant de charge entre différentes branches parallèles de générateurs électrochimiques. De plus, le dispositif décrit dans ce document est un dispositif centralisé qui ne peut être modulé en fonction du nombre de générateurs branchés en parallèle dans la batterie.

Il existe donc un besoin pour un système d'alimentation électrique utilisant un chargeur constitué d'un dispositif de production d'électricité à partir d'une source d'énergie renouvelable qui permette d'optimiser la répartition du courant de charge entre des branches parallèles de générateurs électrochimiques et qui soit modulable en fonction du nombre de générateurs utilisés en parallèle dans le système.

A cet effet, l'invention propose de prévoir une électronique de contrôle par branche parallèle de générateurs électrochimiques du système ; il est ainsi possible de moduler le système en fonction des besoins de l'application sans reconfigurer une électronique centrale. En outre, selon l'invention, chaque électronique de contrôle assure un contrôle de la charge en fonction du SOC des générateurs de sa branche afin de permettre une utilisation optimale de l'énergie limitée disponible dans le chargeur.

Le document US5869949 montre un système d'alimentation électrique comprenant un générateur électrochimique , une électronique de contrôle et un chargeur constitué d'un dispositif de production d'électricité à partir d'une source d'énergie renouvelable, le générateur électrochimique étant reparti en branche et étant connectée en parallèle au chargeur, l'électronique de contrôle étant adaptée à contrôler la charge de la branche, l'électronique de contrôle comprenant un moyen de mesure du courant appliqué à la branche, un moyen d'intégration du courant mesuré, un moyen de détermination de l'état de charge du générateur électrochimique de la branche , un moyen de comparaison de la valeur du courant intégré par rapport à une valeur de consigne fixée en fonction de l'état de charge déterminé , un moyen d'interruption du passage du courant appliqué à la branche lorsque le courant intégré atteint la valeur de consigne.

L'invention concerne un système selon la revendication 1 et un procédé selon la revendication 8.

D'autres caractéristiques et avantages de l'invention apparaîtront à la lecture de la description détaillée qui suit des modes de réalisation de l'invention, donnés à titre d'exemple uniquement, et en références aux figures suivantes qui montrent :
- figure 1, déjà décrite, des mesures acquises sur un système photovoltaïque selon l'art antérieur ;
- figure 2, déjà décrite, un schéma d'un système selon l'art antérieur ;
- figure 3, un schéma d'un système selon l'invention ;
- figure 4, des mesures acquises pour une branche dans un système selon l'invention ;
- figure 5, des mesures acquises pour trois branches dans un système selon l'invention.

L'invention concerne un système d'alimentation électrique utilisant un chargeur constitué d'un dispositif de production d'électricité à partir d'une source d'énergie renouvelable. Le système de l'invention présente un contrôle de la charge décentralisé au niveau de chaque branche parallèle de générateurs électrochimiques. Le nombre de branches de générateurs peut ainsi varier d'une application à l'autre sans que le système soit modifié. Le système selon l'invention propose en outre une régulation de la charge en courant tenant compte du SOC de chaque branche de R:\29600\29631 SAFT\29631EP100302-texte dépôt.doc générateurs électrochimiques. L'énergie limitée de la source constituant le chargeur est donc optimisée.

L'invention sera mieux comprise en se référant à la figure 3. La figure 3 représente schématiquement un système 1 selon l'invention. Les éléments identiques à ceux décrits en référence à la figure 2 portent les mêmes numéros de référence. Contrairement au système de l'art antérieur présenté en figure 2, le système 1 selon l'invention comprend une électronique de contrôle 4 associée à chaque branche de générateurs électrochimiques 3. Une branche de générateurs électrochimiques 3 peut présenter un unique générateur ou une pluralité de générateurs reliés en série. Pour simplifier la description, on parlera d'un générateur électrochimique 3 par branche parallèle.

Le système 1 comprend donc une pluralité d'électroniques de contrôle 4 associées chacune à un générateur électrochimique 3. Chaque électronique de contrôle 4 réalise donc un contrôle de la charge du générateur électrochimique 3 de sa branche par le courant provenant du chargeur 2. Chaque électronique de contrôle 4 assure également l'interface avec l'application extérieure 5. Par exemple, chaque électronique de contrôle 4 peut être intégrée dans un boîtier du générateur électrochimique 3. Ainsi chaque générateur électrochimique 3 supplémentaire, ajouté en parallèle à la batterie du système, sera amené avec sa propre électronique de contrôle 4. De cette façon, les problèmes de dimensionnement et de configuration liés à un contrôleur central sont évités.

Par exemple, pour une application à un réseau de mesures atmosphériques, l'énergie nécessaire peut varier en fonction du nombre de capteurs à alimenter électriquement et de la puissance de l'antenne de transmission des données. Or, le nombre de capteurs et la puissance de l'antenne peuvent varier en fonction de la zone géographique. Ainsi, pour un même client souhaitant installer un tel réseau (même produit aux yeux du client), les besoins en énergie peuvent fortement varier d'une installation à l'autre. Le système de l'invention permet d'assurer une alimentation électrique de chaque installation de façon modulaire : si un site géographique nécessite deux branches de générateurs électrochimiques en parallèle, le système selon l'invention fournira ces deux branches avec deux électroniques de contrôle associées et un chargeur photovoltaïque, éolien ou hybride ; alors que si un autre site géographique nécessite une seule ou trois branches de générateurs électrochimiques en parallèle, le système selon l'invention fournira la ou les branches de générateurs et électroniques de contrôle associées avec un chargeur sans que la configuration des électroniques soit différente du premier site géographique. En outre, si le client requiert davantage d'énergie sur un site géographique donné, par exemple par l'ajout de capteurs supplémentaires ou par remplacement avec une antenne plus puissante, il est possible d'ajouter simplement une branche au système sans modifier l'installation existante. Cet exemple est donné à titre d'illustration seulement. Un autre exemple présentant les mêmes contraintes et auquel le système de l'invention apporte les mêmes avantages peut être un réseau de télécommunication dont les besoins en énergie varie d'un site géographique à l'autre en fonction de la puissance des antennes à alimenter.

L'électronique de contrôle 4 de chaque branche de générateurs 3 va être plus précisément décrite. Chaque électronique de contrôle 4 comprend au moins un moyen de mesure du courant traversant le générateur électrochimique 3 auquel elle est associée ; un moyen d'intégration du courant mesuré afin de déterminer un courant moyen traversant le générateur électrochimique 3; un moyen d'interruption du passage du courant dans le générateur électrochimique 3 lorsque le courant intégré atteint une valeur de consigne I ; un moyen de détermination de l'état de charge du générateur électrochimique 3 ; un moyen de comparaison de la valeur du courant intégré avec une valeur de consigne I.

Le moyen de détermination du SOC du générateur 3 dépend du type de générateur. Pour certains générateurs électrochimiques, tels que du type Ni-MH ou Ni-Cd, le SOC peut être déterminé par mesure des courants entrant et sortant du générateur (par exemple un compteur d'ampère-heure). En effet, pour ces types de générateurs, la mesure de la tension aux bornes du générateur n'est pas adaptée pour la détermination du SOC car un plateau de tension est atteint alors que le générateur électrochimique n'est pas encore chargé. Ainsi, l'électronique de contrôle 4 peut déterminer le SOC de générateurs de type Ni-MH ou Ni-Cd en fonction des courants entrant et sortant du générateur électrochimique 3.

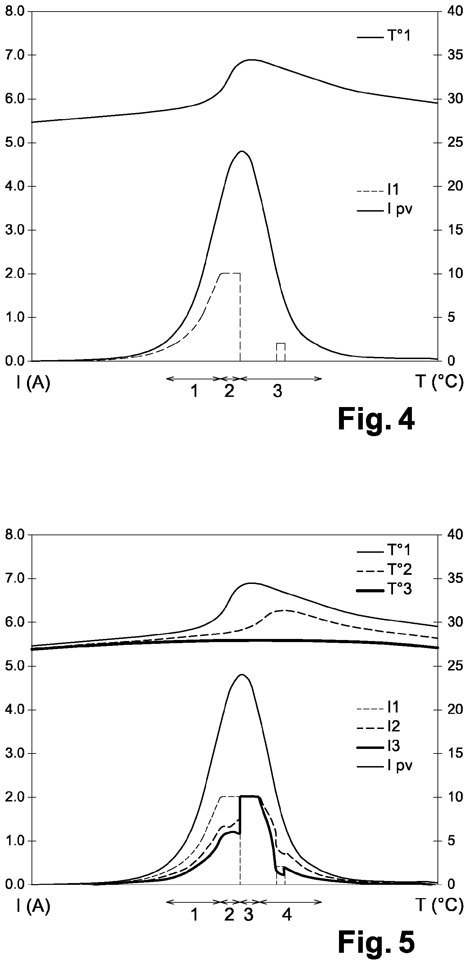

La valeur de consigne I du courant intégré est fixée en fonction du SOC du générateur électrochimique 3, comme cela sera détaillé plus loin en référence aux figures 4 et 5. Cette valeur de consigne I du courant intégré peut aussi être fixée en fonction de caractéristiques du chargeur 2. Par exemple, dans le cas où le chargeur 2 est un panneau de cellules photovoltaïques, la valeur de consigne peut être adaptée à la puissance du panneau de cellules photovoltaïques afin de répartir de manière optimale le courant de charge fourni par le panneau de cellules photovoltaïques.

Chaque électronique de contrôle 4 peut également comprendre d'autres fonctions électroniques, telles que des capteurs de température, des moyens de détermination de l'état de santé (désigné par SOH pour « State Of Health » en anglais) du générateur électrochimique 3, et des moyens de communication avec un gestionnaire du système.

L'invention concerne également un procédé de contrôle de la charge d'une pluralité de générateurs électrochimiques 3 répartis en au moins deux branches connectées en parallèle à un chargeur 2 constitué d'un dispositif de production d'électricité à partir d'une source d'énergie renouvelable tel qu'un panneau de cellules photovoltaïques, une éolienne, ou un dispositif hybride.

Le procédé selon l'invention et le fonctionnement d'un système 1 selon l'invention seront mieux compris en se référant aux figures 4 et 5.

Afin de faciliter la compréhension du procédé et du système selon l'invention, la description va être limitée au cas où le chargeur est un panneau de cellules photovoltaïques. Il est entendu que l'exemple n'est pas limitatif et que le chargeur peut être un autre dispositif de production d'électricité à partir d'une source d'énergie renouvelable, telle qu'une éolienne ou un dispositif hybride.

La figure 4 illustre la détermination de la valeur de consigne I en fonction du SOC d'un générateur électrochimique. De même que pour la figure 3, les courbes situées dans la partie inférieure du graphe représentent l'évolution des courants au cours de la journée. La courbe Ipv représente l'évolution du courant délivré par le panneau de cellules photovoltaïques. Une seule courbe I1 est représentée pour un générateur électrochimique donné. La partie supérieure du graphe présente l'évolution de la température du générateur électrochimique au cours de la journée. Le graphe de la figure 4 décrit trois phases dans le fonctionnement du système selon l'invention :
- Phase 1 : le courant Ipv fourni par le panneau de cellules photovoltaïques est utilisé pour charger le générateur électrochimique. La courbe de température indique que le générateur électrochimique s'échauffe et s'approche de son état de fin de charge. Le contrôleur du générateur fixe donc la valeur de consigne à 2A dans l'exemple illustré. Cette valeur de consigne dépend bien de l'état de charge du générateur.
- Phase 2 : la charge du générateur électrochimique passe en mode régulé à 2A. La régulation en courant à 2A limite l'échauffement du générateur électrochimique. Pendant le mode régulé, un interrupteur du contrôleur adapte les durées d'ouvertures et de fermetures d'un interrupteur autorisant ou empêchant le passage du courant de charge. Une telle régulation est par exemple décrite dans le document EP-A-1 848 087 mentionné précédemment.
- Phase 3 : le générateur électrochimique arrive en fin de charge. Le courant de charge est stoppé. L'échauffement est maîtrisé et la température redescend progressivement. Le contrôleur du générateur adapte alors la valeur de la consigne (à 0,5A dans l'exemple illustré) pour assurer un simple entretien de la charge.

Le système 1 selon l'invention propose ainsi, pour chaque branche de générateur électrochimique 3 reliée en parallèle au chargeur 2, une électronique de contrôle 4 qui est adaptée à :
- mesurer le courant appliqué au générateur électrochimique 3,
- intégrer ce courant mesuré en fonction du temps,
- déterminer l'état de charge (SOC) du générateur électrochimique 3 ;
- comparer la valeur du courant intégré par rapport à une valeur de consigne I fixée en fonction de l'état de charge déterminé,
- adapter les durées d'interruption du passage du courant dans le générateur en fonction de la valeur de consigne I.

Comme indiqué précédemment, cette valeur de consigne I peut aussi tenir compte de caractéristiques du chargeur 2 en plus de l'état de charge du générateur 3. Par exemple, dans le cas où le chargeur 2 est un panneau de cellules photovoltaïques, en cas de faible puissance fournie, l'électronique de contrôle 4 peut réduire la valeur de consigne I, permettant ainsi la répartition du courant dans les branches du système.

La figure 5 illustre la répartition des courants de charge entre les branches parallèles de générateurs électrochimiques du système selon l'invention. De même que pour les figures 1 et 3, les courbes situées dans la partie inférieure du graphe représentent l'évolution des courants au cours de la journée. La courbe Ipv représente l'évolution du courant délivré par le panneau de cellules photovoltaïques et les courbes I1, I2, I3 représentent respectivement les courants traversant chacune des trois branches. La partie supérieure du graphe présente l'évolution des températures dans les générateurs électrochimiques.

Le graphe de la figure 5 décrit quatre phases dans le fonctionnement du système :
- Phase 1 : le courant Ipv fourni par le panneau de cellules photovoltaïques est réparti entre les trois générateurs électrochimiques. La première branche prend plus de courant que les autres, du fait d'une résistance interne plus faible par exemple, et se charge plus rapidement. Le générateur de cette branche s'échauffe donc davantage que les autres. L'électronique de contrôle de cette branche fixe une valeur de consigne à 2A.
- Phase 2 : la charge de la première branche est régulée à 2A comme décrit en référence à la figure 4. Les deux autres branches de générateurs électrochimiques peuvent alors prendre davantage de courant de charge.
- Phase 3 : le générateur électrochimique de la première branche est arrivé en fin de charge. Le passage du courant dans cette première branche est totalement interrompu et le courant de charge peut être intégralement réparti entre les autres branches. De même que pour la première branche, une valeur de consigne (à 2A dans l'exemple) régule la charge et limite l'échauffement des générateurs dans les deuxième et troisième branches.
- Phase 4 : l'électronique de contrôle de la première branche assure un entretien de la charge avec une nouvelle valeur de consigne (0,5A).

Le système d'alimentation électrique selon l'invention permet donc une gestion optimale du courant de charge fourni par un chargeur constitué d'un dispositif de production d'électricité à partir d'une source d'énergie renouvelable. Le système d'alimentation électrique selon l'invention permet aussi une modularité complète en fonction des besoins de l'application. De plus, la régulation de la charge en courant permet d'utiliser des générateurs de type Ni-MH ou Ni-Cd dans un système d'alimentation électrique utilisant un chargeur constitué d'un dispositif de production d'électricité à partir d'une source d'énergie renouvelable.

Bien entendu, la présente invention n'est pas limitée aux modes de réalisation précédemment décrits à titre d'exemple. Notamment, le nombre de branches reliées en parallèle dans le système selon l'invention peut varier, ainsi que le nombre de générateurs reliés en série dans une branche. De même, le chargeur du système selon l'invention peut être constitué de toute source d'énergie renouvelable pour laquelle l'énergie disponible est limitée et variable dans le temps.

## Revendications

1. Système d'alimentation électrique (1) comprenant une pluralité de générateurs électrochimiques (3), une pluralité d'électroniques de contrôle (4) et un chargeur (2) constitué d'un dispositif de production d'électricité à partir d'une source d'énergie renouvelable, les générateurs électrochimiques étant répartis en au moins deux branches (3) connectées en parallèle au chargeur (2), chaque électronique de contrôle (4) étant adaptée à contrôler la charge d'une branche (3), chaque électronique de contrôle (4) comprenant :
- un moyen de mesure du courant appliqué à la branche (3),
- un moyen d'intégration du courant mesuré,
- un moyen de détermination de l'état de charge (SOC) du ou des générateur(s) électrochimique(s) de la branche (3),
- un moyen de comparaison de la valeur du courant intégré par rapport à une valeur de consigne (I) fixée en fonction de l'état de charge (SOC) déterminé,
- un moyen d'interruption du passage du courant appliqué à la branche (3) lorsque le courant intégré atteint la valeur de consigne (I), chaque électronique de contrôle comprenant un interrupteur qui adapte les durées d'ouverture et de fermeture du moyen d'interruption du passage du courant appliqué à la branche en fonction de la valeur de consigne,
dans lequel les générateurs électrochimiques sont de type nickel métal hydrure (Ni-MH) ou de type nickel cadmium (Ni-Cd).

2. Système d'alimentation électrique (1) selon la revendication 1, dans lequel le chargeur (2) comprend au moins un panneau de cellules photovoltaïques.

3. Système d'alimentation électrique (1) selon la revendication 1 ou 2, dans lequel le chargeur (2) comprend au moins une éolienne.

4. Système d'alimentation électrique (1) selon l'une des revendications précédentes, dans lequel chaque électronique de contrôle (4) de la charge est intégrée à un boîtier contenant le ou les générateurs électrochimiques de la branche (3) à laquelle elle est associée.

5. Système d'alimentation électrique (1) selon l'une des revendications précédentes, dans lequel la valeur de consigne (I) de chaque branche est fixée en fonction de caractéristiques du chargeur (2).

6. Système d'alimentation électrique (1) selon l'une des revendications précédentes, dans lequel chaque électronique de contrôle (4) comprend en outre un moyen de détermination de l'état de santé (SOH) du ou des générateurs électrochimiques de la branche (3) à laquelle elle est associée.

7. Système d'alimentation électrique (1) selon l'une des revendications précédentes, dans lequel chaque électronique de contrôle (4) comprend en outre un moyen de communication avec un gestionnaire du système.

8. Procédé de contrôle de la charge d'une pluralité de générateurs électrochimiques, de type nickel métal hydrure (Ni-MH) ou de type nickel cadmium (Ni-Cd), répartis en au moins deux branches (3) connectées en parallèle à un chargeur (2) constitué d'un dispositif de production d'électricité à partir d'une source d'énergie renouvelable, le procédé comprenant les étapes de :
- mesure du courant appliqué à chaque branche (3),
- intégration du courant mesuré dans chaque branche,
- détermination de l'état de charge (SOC) du ou des générateur(s) électrochimique(s) de chaque branche (3) ;
- comparaison, pour chaque branche, de la valeur du courant intégré par rapport à une valeur de consigne (I) fixée en fonction de l'état de charge déterminé,
- interruption du passage du courant appliqué à la branche (3) lorsque le courant intégré atteint la valeur de consigne,
- adaptation, pour chaque branche, de durées d'ouverture et fermeture d'un moyen d'interruption du passage du courant dans la branche en fonction de la valeur de consigne (I).

9. Procédé de contrôle selon la revendication 8, dans lequel le chargeur (2) comprend au moins un panneau de cellules photovoltaïques.

10. Procédé de contrôle selon la revendication 8 ou 9, dans lequel le chargeur (2) comprend au moins une éolienne.

11. Procédé de contrôle selon l'une des revendications 8 à 10, dans lequel la valeur de consigne (I) dans chaque branche est fixée en fonction de caractéristiques du chargeur (2).

## Patentansprüche

1. Stromversorgungssystem (1), umfassend eine Mehrzahl von elektrochemischen Generatoren (3), eine Mehrzahl von Steuerungselektronik (4) und ein Ladegerät (2), bestehend aus einer Vorrichtung zur Erzeugung von Strom aus einer erneuerbaren Energiequelle, wobei die elektrochemischen Generatoren in mindestens zwei Stränge (3) unterteilt sind, die parallel an das Ladegerät (2) angeschlossen sind, wobei jede Steuerungselektronik (4) dazu ausgelegt ist, die Ladung eines Strangs (3) zu steuern, wobei jede Steuerungselektronik (4) umfasst:
- ein Mittel zum Messen des dem Strang (3) zugeführten Stroms,
- ein Mittel zur Integration des gemessenen Stroms,
- ein Mittel zur Bestimmung des Ladezustandes (SOC) des oder der elektrochemischen Generatoren des Strangs (3),
- ein Mittel zum Vergleich des Wertes des integrierten Stroms mit einem Sollwert (I), der in Abhängigkeit von dem bestimmten Ladezustand (SOC) festgelegt ist,
- ein Mittel zum Unterbrechen des dem Strang (3) zugeführten Stromflusses, wenn der integrierte Strom den Sollwert (I) erreicht, wobei jede Steuerungselektronik einen Unterbrecher umfasst, der die Öffnungs- und Schließzeiten des Mittels zum Unterbrechen des dem Strang zugeführten Stromflusses in Abhängigkeit von dem Sollwert anpasst,
wobei die elektrochemischen Generatoren vom Typ Nickel-Metallhydrid (Ni-MH) oder Nickel-Cadmium (Ni-Cd) sind.

2. Stromversorgungssystem (1) gemäß Anspruch 1, wobei das Ladegerät (2) mindestens eine Platte mit photovoltaischen Zellen umfasst.

3. Stromversorgungssystem (1) gemäß Anspruch 1 oder 2, wobei das Ladegerät (2) mindestens eine Windkraftanlage umfasst.

4. Stromversorgungssystem (1) gemäß einem der vorangehenden Ansprüche, wobei jede Steuerungselektronik (4) der Ladung in ein Gehäuse integriert ist, das den (die) elektrochemischen Generator(en) des Strangs (3) enthält, dem sie zugeordnet ist.

5. Stromversorgungssystem (1) gemäß einem der vorangehenden Ansprüche, wobei der Sollwert (I) jedes Strangs in Abhängigkeit von den Merkmalen des Ladegerätes (2) festgelegt ist.

6. Stromversorgungssystem (1) gemäß einem der vorangehenden Ansprüche, wobei jede Steuerungselektronik (4) ferner ein Mittel zur Bestimmung des Gesundheitszustandes (SOH) des oder der elektrochemischen Generatoren des Strangs (3) aufweist, dem sie zugeordnet ist.

7. Stromversorgungssystem (1) gemäß einem der vorangehenden Ansprüche, wobei jede Steuerungselektronik (4) ferner ein Mittel zur Kommunikation mit einem Systemmanager umfasst.

8. Verfahren zur Steuerung der Ladung mehrerer elektrochemischer Generatoren vom Typ Nickel-Metallhydrid (Ni-MH) oder Nickel-Cadmium (Ni-Cd), die in mindestens zwei Stränge (3) unterteilt sind, die parallel an ein Ladegerät (2) angeschlossen sind, das aus einer Vorrichtung zur Erzeugung von Strom aus einer erneuerbaren Energiequelle besteht, wobei das Verfahren die folgenden Schritte umfasst:
- Messen des jedem Strang (3) zugeführten Stroms,
- Integrieren des in jedem Strang gemessenen Stroms,
- Bestimmen des Ladezustandes (SOC) des oder der elektrochemischen Generatoren jedes Strangs (3);
- Vergleichen des Wertes des integrierten Stroms für jeden Strang mit einem Sollwert (I), der in Abhängigkeit von dem bestimmten Ladezustand festgelegt ist,
- Unterbrechen des dem Strang (3) zugeführten Stromflusses, wenn der integrierte Strom den Sollwert erreicht,
- Anpassen der Öffnungs- und Schließzeiten eines Mittels zum Unterbrechen des Stromflusses im Strang in Abhängigkeit vom Sollwert (I) für jeden Strang.

9. Steuerungsverfahren gemäß Anspruch 8, wobei das Ladegerät (2) mindestens eine Platte mit photovoltaischen Zellen umfasst.

10. Steuerungsverfahren gemäß Anspruch 8 oder 9, wobei das Ladegerät (2)

11. Steuerungsverfahren gemäß einem der Ansprüche 8 bis 10, wobei der Sollwert (I) in jedem Strang in Abhängigkeit von den Merkmalen des Ladegerätes (2) festgelegt ist.

## Claims

1. An electrical power supply system (1) comprising a plurality of electrochemical cells (3), a plurality of control electronics circuits (4) and a charger (2) made up by apparatus for producing electricity from a renewable energy source, the electrochemical cells being divided into at least two branches (3) connected in parallel to the charger (2), each control electronics circuit (4) being adapted to control the charging of one branch (3), each control electronics circuit (4) comprising:
- a means for measuring current being applied to the branch (3),
- a means for integrating the current measured,
- a means for determining a state of charge (SOC) of the electrochemical cell or cells of the branch (3),
- a means for comparing the integrated current value with a set value (I) set as a function of the state of charge (SOC) determined,
- a means for interrupting the passage of current being applied to the branch (3) when the integrated current reaches the set value (I), each of the control electronics including a switch which adapts the duration of opening and closing of the means for interrupting the passage of current applied to the branch as a function of the set value,
in which the electrochemical cells are of the nickel metal hydride (Ni-MH) type or of the nickel cadmium (Ni-Cd) type.

2. The electrical power supply system (1) according to claim 1, wherein the charger (2) comprises at least one photovoltaic cell panel.

3. The electrical power supply system (1) according to claim 1 or 2, wherein the charger (2) comprises at least one wind turbine.

4. The electrical power supply system (1) according to one of the preceding claims, wherein each charging control electronics circuit (4) is integrated into a housing containing the electrochemical cell or cells of the branch (3) with which it is associated.

5. The electrical power supply system (1) according to one of the preceding claims, wherein the set value (I) for each branch is set as a function of characteristics of the charger (2).

6. The electrical power supply system (1) according to one of the preceding claims, wherein each control electronics circuit (4) further includes means for determining the state of health (SOH) of the electrochemical cell or cells of the branch (3) with which it is associated.

7. The electrical power supply system (1) according to one of the preceding claims, wherein each control electronics circuit (4) further includes a means for communicating with a system management circuit.

8. A method for controlling charging of a plurality of electrochemical cells of the nickel metal hydride (Ni-MH) type or of the nickel cadmium (Ni-Cd) type, distributed into at least two branches (3) connected in parallel to a charger (2) consisting of apparatus for producing electricity from a renewable energy source, the method comprising the steps of:
- measuring a current being applied to each branch (3),
- integrating the current measured in each branch,
- determining a state of charge (SOC) of the electrochemical cell or cells of each branch (3),
- comparing, for each branch, the value for integrated current with a set value (I) set as a function of the determined state of charge,
- interrupting the passage of current being applied to the branch (3) when the integrated current reaches the set value,
adapting, for each branch, the duration of opening and closing of means for interrupting the passage of current in the branch as a function of the set value (I).

9. The method for controlling according to claim 8, wherein the charger (2) comprises at least one photovoltaic cell panel.

10. The method for controlling according to claim 8 or 9, wherein the charger (2) comprises at least one wind turbine.

11. The method for controlling according to one of claims 8 to 10, wherein the set value (I) in each branch is set as a function of characteristics of the charger (2).
